# EUROPÄISCHE PATENTSCHRIFT

(11) **EP 3 449 550 B1**
(45) Veröffentlichungstag und Bekanntmachung des Hinweises auf die Patenterteilung: **26.11.2025**
(21) Anmeldenummer: 17718553.5
(22) Anmeldetag: 24.04.2017
(51) Int. Cl.: H02K 15/35, H02K 3/02, H02K 3/12, H02K 3/50, H02K 7/18, H02K 3/38, F03D 3/00

(54) **STATOR EINES GENERATORS EINER WINDENERGIEANLAGE UND VERFAHREN ZUM HERSTELLEN EINES DERARTIGEN STATORS**
STATOR OF A WIND TURBINE GENERATOR AND METHOD OF MANUFACTURING SUCH A STATOR
STATOR D'UN GÉNÉRATRICE DE L'ÉOLIENNE ET MÉTHODE DE FABRICATION D'UN TEL STATOR

(30) Priorität: 28.04.2016 DE 102016107929
(43) Veröffentlichungstag der Anmeldung: 06.03.2019
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2017/059664
(87) Internationale Veröffentlichungsnummer: WO 2017/186644

(56) Entgegenhaltungen:
- EP-A2- 1 039 616
- EP-A2- 1 039 616
- WO-A1-2005/004308
- WO-A1-2007/012207
- DE-A1- 102009 008 405
- DE-A1- 102009 008 981
- DE-A1- 102012 208 550
- DE-A1- 102014 216 210
- GB-A- 2 490 901
- US-A- 5 619 787
- US-A1- 2010 187 939
- US-A1- 2010 187 939
- US-A1- 2013 200 743
- US-A1- 2013 200 743
- US-A1- 2014 070 638
- US-A1- 2014 070 638
- US-A1- 2015 013 149

## Beschreibung

Die Erfindung betrifft eine Formspule eines Stators eines Generators einer getriebelosen Windenergieanlage. Ferner betrifft die Erfindung einen Wicklungsaufbau eines Stators eines Generators einer Windenergieanlage sowie einen Stator. Außerdem betrifft die Erfindung ein Verfahren zum Herstellen eines Stators.

Es sind Statoren von Generatoren getriebeloser Windenergieanlagen bekannt, die mehrere Stränge mit jeweils mehreren Wicklungen aufweisen. Diese Wicklungen werden mit einem isolierten Draht, z. B. aus Kupfer, erzeugt. Hierzu wird in die Nuten eines Statorgrundkörpers des Stators der Draht eines Strangs eingewickelt, sodass der Strang aus einem durchgängigen Stück des Drahts hergestellt wird. Der Statorgrundkörper wird auch Statorring genannt. Dieses Wickeln des Stators ist sehr aufwändig und muss von Hand erfolgen, um - insbesondere in den Biegestellen - die Unversehrtheit der Drähte sowie auch einer Isolierung des Drahts schon während des Wickelns zu überwachen.

Ferner sind Formspulen bekannt, die einem leitenden Material entsprechen, das in mehreren Windungen vorgeformt ist und vor dem Einsetzen in die Nuten vorgefertigt wird. Die bekannten Formspulen weisen weit über den Statorgrundkörper hinausragende Anschlüsse auf, mit denen die einzelnen Formspulen durch Löten oder Schweißen miteinander verbunden werden, sodass sich die gewünschte elektrische Verschaltung des gesamten Wicklungsaufbaus ergibt. Die weit hinrausragenden Anschlüsse sind nötig, da aufgrund der hohen Hitzeentwicklung beim Löten oder Schweißen die Anschlüsse weit von der Nut beabstandet sein müssen, sodass die Formspule im Bereich der Nut nicht zu heiß wird, was zu einer Beschädigung des Stators, nämlich insbesondere einer Isolierung gegenüber dem Statorgrundkörper, führen könnte. Derartig bekannte Statoren weisen daher eine besonders hohe axiale Tiefe gegenüber gewickelten Statoren auf, die keine weiteren Vorteile im späteren Betrieb bringt und die Handhabung erschwert.

Der vorliegenden Erfindung liegt somit die Aufgabe zugrunde, wenigstens eines der genannten Probleme des Standes der Technik anzugehen. Insbesondere soll eine Lösung vorgeschlagen werden, die weniger aufwändig ist als die Methode des Wickelns des Stators mit durchgehenden Strängen, die aber gleichzeitig keine übermäßig hohe axiale Tiefe eines Stators, wie er im Stand der Technik bekannt ist, erfordern. Zumindest soll zu bisher bekannten Lösungen eine alternative Lösung vorgeschlagen werden.

Das Deutsche Patent- und Markenamt hat in der Prioritätsanmeldung zu vorliegender Anmeldung den folgenden Stand der Technik recherchiert: US 2013/0200743 A1. US 2014/0265673 A1, DE 600 07 474 T2, WO 2014/087389 A1, US 2014/0070638 A1, EP 2 621 062 A1 und US 2012/0263602 A1. Ferner sei auf das Dokument US 2013/0200743 A1 hingewiesen, das Spulen offenbart, die durch einzelne, miteinander verbundene Stabelemente hergestellt werden. Außerdem offenbart Dokument US 2010/0187939 A1 U-förmige Spulenelemente, mit denen ebenfalls durch Verbindung eine Wicklung hergestellt wird. Das Dokument US 2010/0187939 A1 offenbart ein Statorsegment für einen Stator eines Generators, wobei das Statorsegment ein Basiselement und ein Spulenelement umfasst. Das Basiselement umfasst einen Verbindungsbereich, der geeignet ist, um ein Verbindungsspulenelement anzubringen. Weiter offenbart das Dokument EP 1 039 616 A3 einen Motorstator, bei dem Leiter in Schlitze des Stators eingebracht werden und diese Leiter durch Verbindungselemente verbunden werden. Das Dokument US 2015/0013149 A1 offenbart ein Verfahren zum Herstellen einer Spule durch Wickeln eines Leiters in einer Schleifenform derart, dass sich ein gestufter Abschnitt bildet. Das Dokument US 5,619,787 A offenbart ein Verfahren zum Einsetzen von Formspulen in einen Stator. Das Dokument DE 10 2014 216 210 A1 offenbart ein Verfahren zum Herstellen einer Formspule, die aus einem Blech ausgeschnitten und durch Abkanten der Abschnitte hergestellt wird.

Erfindungsgemäß wird ein Stator eines Generators mit mehreren Formspulen nach Anspruch 1 für einen Stator eines Generators einer getriebelosen Windenergieanlage vorgeschlagen. Die Formspulen umfassen einen elektrischen Leiter. Der elektrische Leiter ist in mehreren Windungen gewickelt und weist ein erstes sowie ein zweites Ende auf. Das erste Ende weist ein erstes Verbindungsteil und das zweite Ende ein zweites Verbindungsteil auf. Das erste und das zweite Verbindungsteil sind jeweils eingerichtet, um mit unterschiedlichen Verbindungselementen verbunden zu werden. Außerdem umfasst der elektrische Leiter Aluminium oder besteht im Wesentlichen aus Aluminium.

Eine Formspule ist in diesem Zusammenhang als vorgefertigte, also vorgewickelte, Spule zu verstehen, die eine vordefinierte Form aufweist.

Dank der Erfindung ist ein aufwändiges Wickeln des Stators mit durchgehenden Strängen nicht nötig, sondern es können Formspulen vorgefertigt werden. Hierbei kann eine übermäßige Tiefe in axialer Richtung trotz der Formspulen vermieden werden, da die Formspulen erfindungsgemäß aus Aluminium gebildet sind und somit ein Löten oder Verschweißen der Verbindungsteile der Formspulen mit Verbindungselementen in einem wesentlich geringeren Abstand zum Statorgrundkörper erfolgen kann, da aufgrund der geringeren Hitze, die beim Löten oder Schweißen von Aluminium benötigt wird, die Gefahr von Beschädigungen gegenüber bekannten Kupferwicklungen reduziert ist.

Damit ist also ein Stator realisierbar, der eine wesentlich geringere axiale Tiefe aufweist und der durch einfaches Einlegen der Formspulen herstellbar ist.

Vorzugsweise ist der Generator als Ringgenerator ausgebildet. Demnach sind die magnetisch aktiven Bereiche des Läufers und Stators, nämlich besonders die Blechpakete des Stators und Läufers, in einem ringförmigen Bereich um den Luftspalt angeordnet, der den Läufer und Stator trennt. Dabei ist der Generator in einem inneren Bereich mit einem Radius von wenigstens 50 % des mittleren Luftspaltradius frei von magnetisch wirksamen Bereichen.

Ein Ringgenerator kann auch dadurch definiert werden, dass die radiale Stärke der magnetisch aktiven Teile oder - anders ausgedrückt - des magnetisch aktiven Bereichs, nämlich der radialen Dicke vom Innenrand des Polrads bis zum Außenrand des Stators bzw. vom Innenrand des Stators bis zum Außenrand des Läufers, im Falle eines Außenläufers kleiner als der Luftspaltradius ist, wobei insbesondere die radiale Stärke des magnetisch aktiven Bereichs des Generators weniger als 30 %, insbesondere weniger als 25 %, des Luftspaltradius beträgt. Außerdem oder alternativ kann ein Ringgenerator dadurch definiert werden, dass die Tiefe, nämlich die axiale Ausdehnung des Generators kleiner als der Luftspaltradius ist, wobei die Tiefe weniger als 30 %, insbesondere weniger als 25 %, des Luftspaltradius beträgt. Außerdem oder alternativ ist ein Ringgenerator vielpolig ausgebildet und weist nämlich wenigstens 48, 96, insbesondere wenigstens 192, Rotorpole auf.

Gemäß einer weiteren Ausführungsform entsprechen die Verbindungsteile jeweils einem im Wesentlichen geraden Abschnitt des elektrischen Leiters. Zumindest eines der Verbindungsteile ist bezogen auf eine Spulenlängsachse oder eine Parallele zur Spulenlängsachse abgewinkelt. Alternativ oder zusätzlich ist das andere Verbindungsteil parallel zu einer Spulenlängsachse der Formspule ausgerichtet und somit nicht abgewinkelt.

Demnach sind die beiden Anschlüsse bezogen auf eine Spulenlängsachse oder auf eine Parallele zur Spulenlängsachse in einem zueinander unterschiedlichen Winkel angeordnet. Gemäß einer bevorzugten Ausführungsform liegt dieser Winkel im Bereich von 45 bis 90 Grad, besonders bevorzugt im Bereich von 60 bis 80 Grad.

Eine Formspule weist gemäß einer Ausführungsform zwei im Wesentlichen parallele langgestreckte Schenkel auf, wobei jeder Schenkel eine Länge von mindestens 80 cm, mindestens 100 cm oder mindestens 120 cm, aufweist. Diese Schenkel bilden den Teil der Formspule, der später vollständig in die Nuten eines Statorgrundkörpers einsetzbar ist. Auf einer ersten Seite der Formspule sind die Schenkel miteinander verbunden, wobei auf einer zweiten Seite die Verbindungsteile angeordnet sind. In jeder Nut eines Stators werden später zwei Schenkel unterschiedlicher Formspulen vorgesehen, sodass die Verbindungsteile der Formspulen nach Anordnung in den Nuten im Statorgrundkörper sehr eng beieinander liegen. Durch die Abwinklung zumindest eines der Verbindungsteile gegenüber dem anderen Verbindungsteil ist jedoch eine elektrische Verbindung der Verbindungsteile mit Verbindungselementen möglich, da diese gut zugänglich sind. Gleichzeitig wird der Gefahr eines Kurzschlusses zweier sich berührender Anschlüsse entgegengewirkt.

Gemäß einer weiteren Ausführungsform weist der Leiter mehrere Lagen, insbesondere 2 Lagen, auf. Die Lagen sind eingerichtet, durch Verbindung der Verbindungsteile mit einem Verbindungselement gleichzeitig miteinander verbunden zu werden. Hierbei sind die Lagen gemäß einer besonders bevorzugten Ausführungsform jeweils aus einer Aluminiumflachstange, einem Aluminiumband oder einem Aluminiumflachdraht gebildet.

Besonders bevorzugt weist die Aluminiumflachstange, das Aluminiumband oder der Aluminiumflachdraht eine Höhe von 0,5 bis 1,0 cm und eine Breite von 1,0 bis 3,0 cm auf.

Bevorzugt werden demnach zur Herstellung einer Formspule Lagen, die aus einer Aluminiumflachstange, einem Aluminiumband oder einem Aluminiumflachdraht gebildet sind, mit ihrer breiteren Seite übereinander gestapelt. Nach dem Stapeln werden die gestapelten Lagen in die gewünschte Form der Formspule gebogen, sodass mehrere Windungen, z. B. zwei, drei, vier oder fünf Windungen, jeweils aus den mehreren Lagen erzeugt werden.

Durch das Bilden mehrerer Lagen, die dann durch Verbinden des Verbindungsteils gleichzeitig auch miteinander verbunden werden, ist es möglich, die Formspule einfacher zu biegen, also den elektrischen Leiter in die gewünschte Form zu bringen. Ein gewünschter großer Querschnitt eines elektrischen Leiters, um gewünschte elektrische Eigenschaften aufzuweisen, kann somit durch die Lagenbildung erreicht werden, ohne dass ein schlecht biegbarer einstückiger elektrischer Leiter bereitgestellt werden muss.

Zusammengefasst muss ein elektrischer Leiter mit einer einfachen Lage vergleichsweise doppelt so dick sein wie ein Leiter mit zwei Lagen, um die gleichen elektrischen Eigenschaften wie der Leiter mit zwei Lagen zu erreichen. Der Einsatz eines vergleichsweise flachen Flachdrahts ist somit zur Herstellung der Formen der Formspulen in mehreren Lagen als elektrischer Leiter mit mehreren Windungen vorteilhaft, da dieser vergleichsweise einfacher biegbar ist. Eine Formspule mit mehreren Windungen ist somit besonders einfach herstellbar.

Gemäß einer weiteren Ausführungsform weist die Formspule eine Form auf, bei der ein äußerer Abstand der äußeren Windung, vorzugsweise also der Außenseite der außen liegenden Windung, zumindest in einem Bereich der äußeren Windung zu einem geometrischen Schwerpunkt mehr als 40, 50 oder 60 cm aufweist. Der geometrische Schwerpunkt wird demnach zunächst von der Spule bestimmt und ein Abstand von diesem geometrischen Schwerpunkt zur äußeren Windung, also insbesondere deren außen liegende Seite, bestimmt. In einem Bereich der äußeren Windung weist diese einen Abstand zum geometrischen Schwerpunkt, der auch äußerer Abstand genannt werden kann, auf, der also mehr als 40, 50 oder 60 cm ist.

Gemäß dieser Ausführungsform weist zumindest eines der Enden des elektrischen Leiters eine Entfernung zu mindestens einem Punkt in dem soeben genannten Bereich der äußeren Windung auf, die weniger als 20 cm, oder besonders bevorzugt weniger als 10 cm oder weniger als 5 cm ist. Die Formspule weist demnach nur sehr wenig über den Bereich der Windungen hinausragende Enden zum Verbinden mit Verbindungselementen auf, sodass ein sehr flacher Stator, also ein Stator mit geringer Tiefe, realisierbar ist.

Gemäß einer weiteren Ausführungsform weist die Formspule eine von mindestens drei unterschiedlichen Formen auf. Die drei unterschiedlichen Formen sind dabei so gewählt, dass zumindest eines der Enden des elektrischen Leiters einer Formspule gemäß der ersten Form einen Abstand zu einem geometrischen Schwerpunkt gemäß der ersten Form aufweist, der sich von dem Abstand zumindest eines der Enden einer Formspule gemäß der zweiten Form zu einem geometrischen Schwerpunkt der Formspule gemäß der zweiten Form unterscheidet.

Beispielsweise weist also das erste Ende einer Formspule gemäß der ersten Form einen Abstand zu einem geometrischen Schwerpunkt gemäß der ersten Form auf, der sich von dem Abstand des ersten Endes einer Formspule gemäß der zweiten Form zu einem geometrischen Schwerpunkt der Formspule gemäß der zweiten Form unterscheidet.

Zusätzlich oder alternativ weist das zweite Ende des elektrischen Leiters einer Formspule gemäß der ersten Form einen Abstand zu einem geometrischen Schwerpunkt gemäß der ersten Form auf, der sich von dem Abstand des zweiten Endes einer Formspule gemäß der zweiten Form zu einem geometrischen Schwerpunkt der Formspule gemäß der zweiten Form unterscheidet.

Gemäß der Ausführungsform unterscheidet sich der Abstand zumindest eines der Enden einer Formspule gemäß der dritten Form zu einem geometrischen Schwerpunkt einer Formspule gemäß der dritten Form von den entsprechenden Abständen der Enden der Formspulen gemäß der ersten und der zweiten Form. Demnach unterscheidet sich der Abstand des ersten Endes einer Formspule gemäß der dritten Form zu einem geometrischen Schwerpunkt der Formspule gemäß der dritten Form von dem Abstand des ersten Endes der Formspule gemäß der ersten Form zu einem geometrischen Schwerpunkt der Formspule gemäß der ersten Form und dem Abstand des ersten Endes des elektrischen Leiters einer Formspule gemäß der zweiten Form zu einem geometrischen Schwerpunkt der Formspule gemäß der zweiten Form. Analog gilt dies für die zweiten Enden.

Hierdurch ist beim späteren Einsetzen der Formspulen in die Nuten des Statorgrundkörpers ein Verbinden der Formspule in einfacher Weise möglich, da benachbarte erste Enden und somit erste Verbindungsteile sowie auch zweite Enden und damit auch die zweiten Verbindungsteile unterschiedliche Höhen aufweisen und damit in einfacher Weise zum Herstellen der elektrischen Verbindungen mittels Verbindungsteilen zugänglich sind.

Gemäß einer weiteren Ausführungsform ist der Leiter oder jede Lage des Leiters der Formspule isoliert, wobei diese Isolierung vorzugsweise mittels einer Lack- und/oder Pulverbeschichtung gebildet ist. Besonders bevorzugt ist im Bereich der Verbindungsteile jedoch keine Isolierung aufgebracht oder diese entfernt worden. Eine Isolierung der Formspule ist somit bereits vor dem Herstellen der Formspule durch einfaches Aufbringen der Isolierschicht, z. B. eines Isolierlacks, auf den Leiter im ungeformten Zustand möglich, sodass eine sichere Isolierung einfach herstellbar ist.

Auch wenn in die Nuten eines Statorgrundkörpers vor dem Einlegen der Formspulen eine Nutenisolation vorgesehen ist, dient die Isolierung des elektrischen Leiters der Formspulen als zusätzliche Isolierung gegenüber dem Statorgrundkörper, der vorzugsweise geblecht ausgeführt und daher ebenfalls leitend ist. Auf eine komplette Umwicklung der Formspulen zur Isolierung, die auch Isolierwicklung genannt wird und üblicherweise vor dem Einsetzen der Formspulen in die Nuten erfolgt, kann somit verzichtet werden. Hierdurch wird die Wärmeabfuhr der Formspule verbessert, da eine Isolierwicklung die Wärmeabfuhr im Betrieb behindert.

Außerdem umfasst der erfindungsgemäße Stator mehrere Verbindungselemente zum Verbinden eines Verbindungsteils einer Formspule nach einer der vorhergehenden Ausführungsformen mit einem Verbindungsteil einer weiteren Formspule nach einer der vorhergehenden Ausführungsformen. Das Verbindungselement entspricht einem U-förmigen Aluminiumblech. Das Verbindungselement ist aus einem Aluminiumblech mit einer Dicke von mindestens 5 mm durch Stanzen oder durch Laserschneiden hergestellt. Das Verbindungselement umfasst ferner an seinen Enden der U-Form jeweils einen Durchbruch, der vorzugsweise rechteckig ist, zum Einführen eines Verbindungsteils einer der Formspulen.

Dank dem Verbindungselement lassen sich die Verbindungsteile der Formspulen auf einfache Art und Weise verbinden. Hierzu werden die Verbindungsteile, die im Wesentlichen dem elektrischen Leiter oder mehreren Lagen des elektrischen Leiters entsprechen, durch die Durchbrüche der Verbindungselemente eingeführt und mit dem Bereich um den Durchbruch des Verbindungselements verschweißt oder verlötet, wobei hierbei besonders vorteilhaft das WIG-Schweißverfahren geeignet ist.

Durch die U-Form des Verbindungselements lassen sich mehrere Verbindungselemente besonders platzsparend anordnen.

Ferner umfasst der erfindungsgemäße Stator einen Wicklungsaufbau. Der Wicklungsaufbau umfasst mehrere Formspulen nach einer der vorhergehenden Ausführungsformen und mehrere Verbindungselemente nach der vorgenannten Ausführungsform, jeweils zum elektrischen Verbinden von zwei Anschlussteilen zweier Formspulen.

Gemäß einer weiteren Ausführungsform sind mehrere Formspulen durch die Verbindungselemente in Serie geschaltet, also miteinander verbunden, und bilden somit einen Strang des Wicklungsaufbaus. Hierbei sind die Formspulen derart miteinander verbunden, dass der Wicklungsaufbau sechs im Umlauf des Stators nacheinander wiederholt nebeneinander angeordnete Stränge aufweist, wobei insbesondere ein erster und ein zweiter Strang einer ersten Phase, ein dritter und ein vierter Strang einer zweiten Phase und ein fünfter und ein sechster Strang einer dritten Phase zugeordnet sind. Demnach sind also sechs Stränge vorgesehen, die jeweils in Serie geschalteten Formspulen mittels Verbindungselementen entsprechen.

Gemäß einer weiteren Ausführungsform ist ein Wicklungsaufbau des Stators in mehrere, insbesondere zwei, vier, sechs oder acht, parallel geschaltete Abschnitte oder Segmente unterteilt. Jedes Segment enthält vorzugsweise sechs Phasen, wobei gleiche Phasen der Segmente im Wicklungsaufbau parallel geschaltet oder verbunden sind. Dadurch erfolgt eine Reduzierung der maximalen in die Stränge induzierten Spannung in Abhängigkeit der Segmentanzahl.

Gemäß einer weiteren Ausführungsform weisen die Verbindungselemente sowie die Formspulen einen im Wesentlichen gleichen Wärmeausdehnungskoeffizienten auf. Hierdurch ist gewährleistet, dass trotz der im Betrieb des Wicklungsaufbaus erzeugten Wärme die Verbindungen beim Löten oder Verschweißen und nach dem Abkühlen nicht wieder aufgrund von Verspannungen aufreißen.

Gemäß einer weiteren Ausführungsform sind Gruppen aus zwölf nebeneinander liegenden ersten Verbindungsteilen mit sechs Verbindungselementen derart verbunden, dass zwischen zwei verbundenen ersten Verbindungsteilen fünf erste Verbindungsteile liegen. In unterschiedlichen Abständen bzw. Höhen zu einem Zentrum des Wicklungsaufbaus sind in Umlaufrichtung drei nebeneinander liegende sich überlappende Verbindungselemente angeordnet. Ferner sind ein erstes, zweites und drittes Verbindungselement, die nebeneinander in Umlaufrichtung angeordnet sind, um 180 Grad gedreht gegenüber einem vierten, fünften und sechsten Verbindungselement, die in Umlaufrichtung nebeneinander angeordnet sind, angeordnet.

Gemäß einer weiteren Ausführungsform sind auch die zweiten Verbindungsteile analog miteinander verbunden.

Gemäß der Erfindung umfasst der Stator eines Generators einer Windenergieanlage einen Statorgrundkörper, der auch Statorring genannt wird, und vorzugsweise aus geblechtem Eisen hergestellt ist. Der Statorgrundkörper weist jeweils benachbarte Nuten auf, die einen im Wesentlichen gleichen Abstand zueinander aufweisen. Außerdem umfasst der Stator mehrere Formspulen nach einer der vorgenannten Ausführungsformen, die in die Nuten eingesetzt sind. Zudem umfasst der Stator mehrere Verbindungselemente nach einer der vorgenannten Ausführungsformen, mit denen jeweils zwei Verbindungsteile zweier Formspulen durch Verschweißen oder Verlöten verbunden sind.

Der Stator ist vorzugsweise gemäß einem Wicklungsaufbau der zuvor genannten Ausführungsform aufgebaut.

Zudem umfasst die Erfindung ein Verfahren zum Herstellen eines Stators, insbesondere eines Stators gemäß der zuvor genannten Ausführungsform. Gemäß dem Verfahren werden Formspulen, insbesondere nach einer der vorgenannten Ausführungsformen, in die Nuten eines Statorgrundkörpers eingesetzt und Verbindungsteile der Formspulen jeweils in einen Durchbruch eines Verbindungselements eingeführt. Hierbei sind die Formspulen sowie die Verbindungselemente mit Aluminium gebildet oder bestehen im Wesentlichen aus Aluminium.

Vorzugsweise wird das Verbindungsteil im Bereich des Durchbruchs zum Verbinden derart erhitzt, dass sich das Aluminium verflüssigt und nach dem Abkühlen eine Verbindung des Verbindungselements mit dem Verbindungsteil erzeugt.

Gemäß einer Ausführungsform werden benachbarte Formspulen nacheinander in die Nuten des Statorgrundkörpers eingesetzt, wobei eine vorbestimmte Anzahl der zuerst einzusetzenden Formspulen nur teilweise in die Nuten eingesetzt wird oder sogar nur im Bereich vor den Nuten positioniert wird und diese vorbestimmte Anzahl erst vollständig zusammen mit einer vorbestimmten Anzahl zuletzt einzusetzender Formspulen in die entsprechenden Nuten eingesetzt wird.

Wie bereits oben erläutert wurde, werden die Schenkel zweier unterschiedlicher Formspulen in eine Nut eingesetzt. Hierdurch werden - in Umlaufrichtung des Stators gesehen - zwischen den beiden Schenkeln ein- und derselben Formspule die Schenkel mehrerer anderer Formspulen eingesetzt. Demnach überschneiden sich also die Formspulen im in den Stator eingesetzten Zustand.

Durch diese Überschneidung wird herkömmlicherweise eine Formspule, die als erstes in die Statornut eingesetzt wurde, zum Einführen der zuletzt einzuführenden Formspule wieder teilweise aus der Nut heraus gebogen. Durch das erfindungsgemäße Herstellungsverfahren ist dieses Herausbiegen nun nicht mehr nötig, sodass keine Beschädigung der Isolierung der Formspulen oder auch ein Verbiegen der Formspulen erfolgt.

Gemäß einer weiteren Ausführungsform des Verfahrens wird der komplettierte Stator vollständig in ein Harzbad oder flüssiges Harz eingetaucht und wieder aus dem Harz entfernt, um das am Stator anhaftende Harz aushärten zu lassen. Hierdurch wird eine Isolierung aller leitenden Teile, die nicht bereits isoliert sind, geschaffen. Außerdem wird somit die gesamte Konstruktion im Bezug auf ihre Stabilität erhöht.

Weitere Ausführungsformen der Erfindung ergeben sich aus den anhand der Zeichnungen näher erläuterten Ausführungsbeispielen. In der Zeichnung zeigt:
- Fig. 1: eine Windenergieanlage,
- Fig. 2: eine schematische Seitenansicht eines Generators,
- Fig. 3: eine Ansicht einer Formspule,
- Fig. 4: eine Ansicht aus dem Zentrum auf den Stator,
- Fig. 5: ein Verbindungselement,
- Fig. 6: einen exemplarischen Ausschnitt des Aufbaus eines Stators und
- Fig. 7: einen weiteren exemplarischen Ausschnitt des Aufbaus eines Stators.

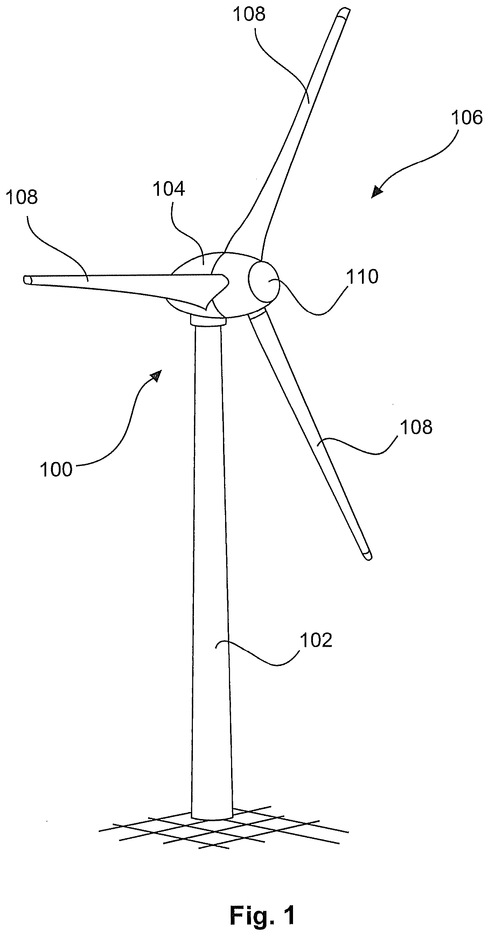

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

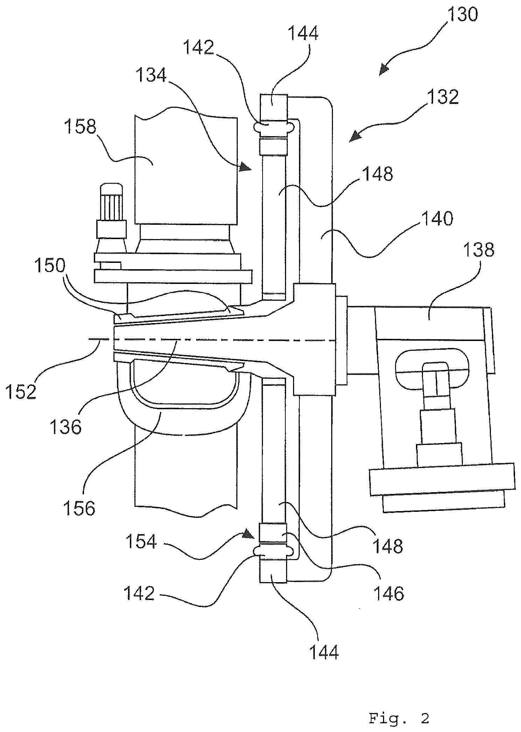

Fig. 2 zeigt einen Generator 130 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind.

Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist, insbesondere weniger als 6 mm, aber einen Durchmesser von mehreren Metern aufweist, insbesondere mehr als 4 m.

Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

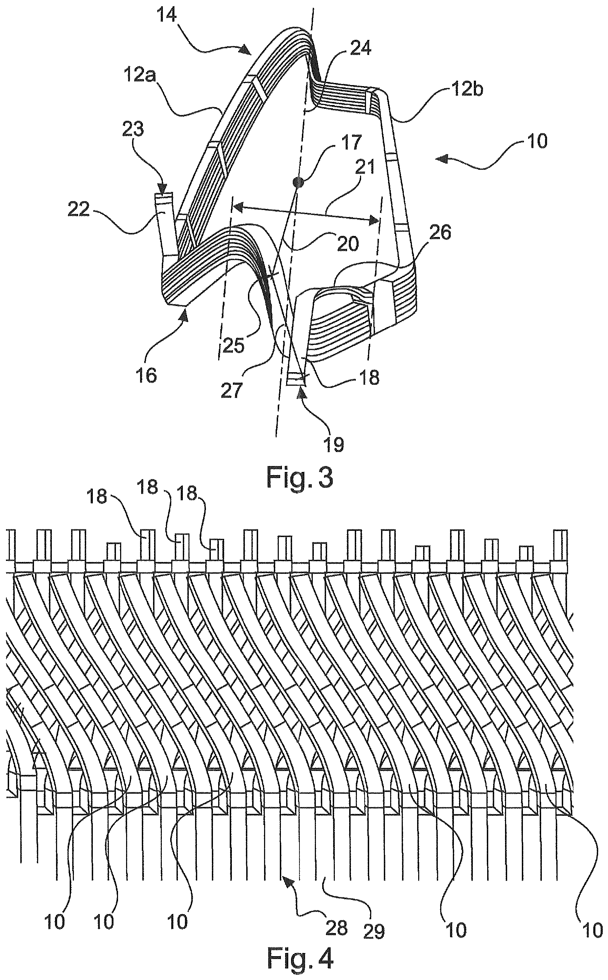

Fig. 3 zeigt eine Ansicht eines Ausführungsbeispiels einer Formspule 10. Die Formspule 10 weist zwei Schenkel 12a, 12b auf. Die Schenkel 12a, 12b verlaufen im Wesentlichen parallel zueinander und weisen eine Länge von mehr als 80 cm auf. Die beiden Schenkel 12a, 12b sind an einer ersten Seite 14 sowie an einer zweiten Seite 16 miteinander verbunden. Die Schenkel 12a, 12b sowie die erste Seite 14 und die zweite Seite 16 bilden eine Form, die einem geometrischen Schwerpunkt 17 aufweist.

Die zweite Seite 16 der Formspule 10 weist ein erstes Verbindungsteil 18 an einem ersten Ende 19 sowie ein zweites Verbindungsteil 22 an einem zweiten Ende 23 auf. Bezogen auf eine Spulenlängsachse 24 oder auf eine Parallele zur Spulenlängsachse 24 ist das zweite Verbindungsteil 22 abgewinkelt und das erste Verbindungsteil 18 nicht abgewinkelt.

Die Formspule 10 umfasst einen Leiter 26 und die Verbindungsteile 18 und 22, die mit Aluminium gefertigt sind. Der Leiter 26 besteht aus zwei Lagen eines Flachdrahts, die in vier Windungen geformt sind. Die beiden Verbindungsteile 18, 22 dienen später zum Verbinden der zwei Lagen des Flachdrahts, der auch Aluminiumflachdraht genannt wird.

Die Formspule 10 ist also mit diesen zwei Lagen und vier Windungen geformt, sodass im Bereich der Schenkel 12a, 12b und im Bereich der ersten Seite 14 acht Lagen des Kupferflachdrahts übereinander angeordnet oder gestapelt sind.

Außerdem ist die Form so gewählt, dass ein äußerer Abstand 20 zumindest in einem Bereich 21 der äußeren Windung zum geometrischen Schwerpunkt 17 mehr als 50 cm beträgt. Zudem beträgt der Abstand 27 zum Ende 19 von einem Punkt 25 in diesem Bereich 21 weniger als 10 cm.

Aufgrund der herausgeführten Verbindungsteile 18, 22 sind im Bereich der zweiten Seite 16 noch sechs Lagen übereinander angeordnet. Der Aluminiumflachdraht ist durch Lackieren isoliert. Im Bereich der Verbindungsteile 18, 22 des Leiters 26 ist die Isolierung jedoch entfernt worden, um die Verbindungsteile 18, 22 später durch Schweißen oder Löten miteinander verbinden zu können, ohne Rückstände der Isolierung im Verbindungsbereich zu hinterlassen.

Fig. 4 zeigt eine Seitenansicht aus dem Zentrum eines Stators 132 auf die Formspulen 10, die jeweils bereits in Nuten 28 eines Statorgrundkörpers 29 eingesetzt sind. Ferner ist erkennbar, dass die ersten Verbindungsteile 18, die in dieser Ansicht erkennbar sind, in verschiedenen Ebenen angeordnet sind.

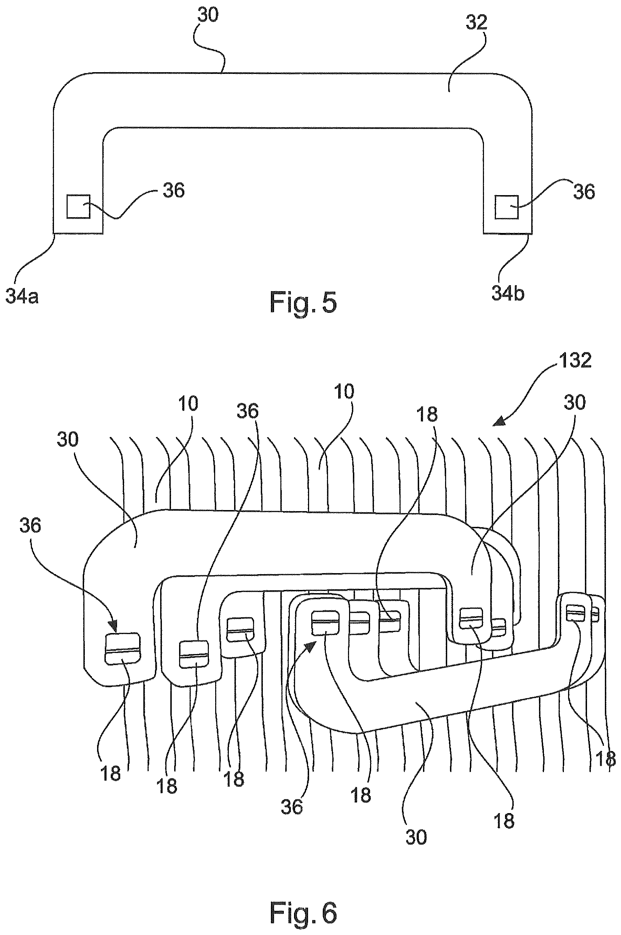

Die Verbindungen der Formspulen 10 werden durch Verbindungselemente 30 hergestellt. Ein derartiges Verbindungselement 30 ist in Fig. 5 dargestellt. Die Verbindungselemente 30 können auch Verbindungslaschen genannt werden. Die Verbindungselemente 30 umfassen jeweils eine Flachstange 32, die an ihren Enden 34a, 34b jeweils einen Durchbruch 36 aufweist. Die Flachstange 32 weist eine U-Form auf, sodass jedes sechste erste Verbindungsteil 18 und jedes sechste zweite Verbindungsteil 22 durch ein derartiges Verbindungselement 30 miteinander verbindbar sind, ohne dass das Verbindungselement 30 in Berührung mit anderen Verbindungsteilen 18, 22, die nicht miteinander verbunden werden sollen, steht. Daher sind die Verbindungselemente 30 nicht isoliert.

Die Verbindungselemente 30, die mit den zweiten Verbindungsteilen 22 verbunden sind, weisen Durchbrüche 36 auf, die weiter voneinander beabstandet sind als die Durchbrüche 36 der Verbindungselemente 30, die mit dem ersten Verbindungsteil 18 verbunden sind. Dies liegt daran, dass - ausgehend von einem Zentrum des Stators 132 - die zweiten Verbindungsteile 20 auf einem größeren Radius liegen als die ersten Verbindungsteile 18.

Fig. 6 zeigt einen exemplarischen Ausschnitt des Aufbaus eines Stators 132, in dessen Nuten 28 Formspulen 10 eingesetzt sind. Die Formspulen 10 sind mittels Verbindungselementen 30 zunächst nur lösbar miteinander verbunden. Hierzu sind die ersten Verbindungsteile 18 der Formspulen 10 durch die Durchbrüche 36 der Verbindungselemente 30 hindurchgeführt.

Ferner ist erkennbar, dass benachbarte Formspulen 10 unterschiedlich lang hinausragende erste Verbindungsteile 18 aufweisen. Hierdurch ergibt sich ein sägezahnartiger Verlauf der Höhen der Verbindungsteile 18.

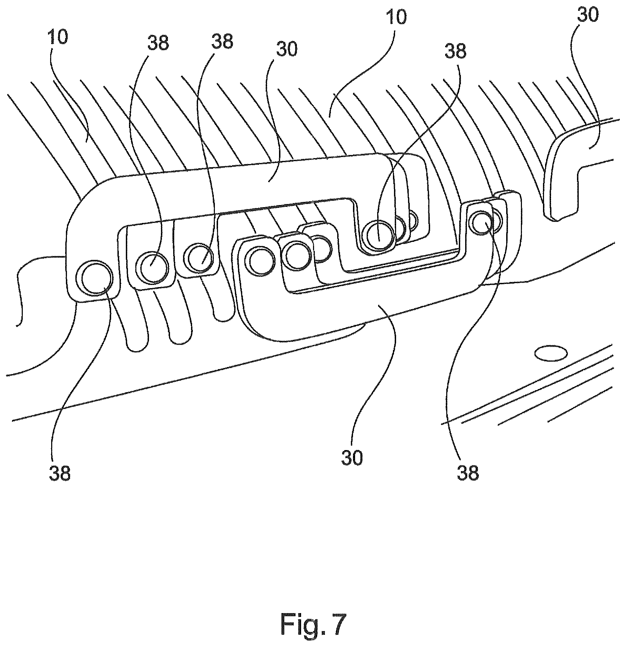

Fig. 7 zeigt im Wesentlichen die gleiche Darstellung wie Fig. 6. Hier sind jedoch nun die Verbindungselemente 30 mit den Verbindungsteilen 18 durch Schweißen verbunden. Die Schweißpunkte 38 sind noch gut erkennbar.

## Patentansprüche

1. Stator eines Generators (130) einer Windenergieanlage (100), umfassend:
- einen Statorgrundkörper (29), insbesondere einen Statorring (144), mit mehreren umlaufenden Nuten (28), wobei jeweils benachbarte Nuten (28) einen im Wesentlichen gleichen Abstand zueinander aufweisen,
- mehrere Formspulen (10), die in die Nuten (28) eingesetzt sind, und die Formspulen jeweils umfassen: einen elektrischen Leiter (26), wobei der elektrische Leiter (26) mehrere Windungen sowie ein erstes (19) und ein zweites Ende (23) aufweist, wobei am ersten Ende (19) ein erstes Verbindungsteil (18) zum Verbinden mit einem Verbindungselement (30) und am zweiten Ende (23) ein zweites Verbindungsteil (22) zum Verbinden mit einem weiteren Verbindungselement (30) angeordnet ist, und wobei der elektrische Leiter (26) Aluminium umfasst oder im Wesentlichen aus Aluminium besteht,
charakterisiert dadurch dass
- mehrere Verbindungselemente (30), mit denen jeweils zwei Verbindungsteile (18, 22) zweier Formspulen (10) durch Verschweißen oder Verlöten verbunden sind, wobei jedes der Verbindungselemente (30) jeweils einem U-förmigen Aluminiumblech mit einer Dicke von mindestens 5 mm entspricht, das vorzugsweise aus einem Aluminiumblech mit einer Dicke von mindestens 5 mm gestanzt oder durch Laserschneiden ausgeschnitten ist, wobei das Verbindungselement (30) an seinen Enden (34a, 34b) der U-Form jeweils einen Durchbruch (36) zum Einführen eines Verbindungsteils (18, 22) einer der Formspulen (10) aufweist.

2. Stator nach Anspruch 1, wobei die Verbindungsteile (18, 22) der Formspulen (10) jeweils einem im Wesentlichen geraden Abschnitt des elektrischen Leiters (26) entsprechen, wobei zumindest eines der Verbindungsteile (18, 22) der Formspule (10) bezogen auf eine Spulenlängsachse (24) oder eine Parallele zur Spulenlängsachse (24) abgewinkelt ist und/oder das andere Verbindungsteil (18, 22) parallel zu einer Spulenlängsachse (24) ausgerichtet ist.

3. Stator nach Anspruch 1 oder 2, wobei die Formspulen (10) mindestens eine Form aufweisen, bei der ein äußerer Abstand (20) der äußeren Windung zumindest in einem Bereich (21) der äußeren Windung zu einem geometrischen Schwerpunkt (17) mehr als 40, 50 oder 60 cm aufweist und zumindest eines der Enden (19, 23) des elektrischen Leiters (26) weniger als 20 cm, vorzugsweise weniger als 10 cm oder weniger als 5 cm, entfernt von mindestens einem Punkt (25) in diesem Bereich (21) liegt.

4. Stator nach einem der vorhergehenden Ansprüche, wobei der Leiter (26) der Formspulen (10) mehrere Lagen, insbesondere zwei Lagen, aufweist und die Lagen eingerichtet sind, durch Verbindung des Verbindungsteils (18, 22) mit einem Verbindungselement (30) miteinander verbunden zu werden, und wobei die Lagen vorzugsweise jeweils aus einer Aluminiumflachstange, einem Aluminiumband oder einem Aluminiumflachdraht gebildet sind.

5. Stator nach einem der vorhergehenden Ansprüche, wobei die Formspulen (10) eine von mindestens drei unterschiedlichen Formen aufweisen, wobei zumindest eines der Enden (19, 23) des elektrischen Leiters (26) einer Formspule (10) gemäß der ersten Form einen Abstand zu einem geometrischen Schwerpunkt (17) gemäß der ersten Form aufweist, der sich von dem Abstand zumindest eines der Enden (19, 23) einer Formspule (10) gemäß der zweiten Form zu einem geometrischen Schwerpunkt (17) der Formspule (10) gemäß der zweiten Form unterscheidet, und wobei sich der Abstand zumindest eines der Enden (19, 23) einer Formspule (10) gemäß der dritten Form zu einem geometrischen Schwerpunkt (17) einer Formspule (10) gemäß der dritten Form von den entsprechenden Abständen der Enden (19, 23) der Formspulen (10) gemäß der ersten und der zweiten Form unterscheidet.

6. Stator nach einem der vorhergehenden Ansprüche, wobei der elektrische Leiter (26) oder jede Lage des Leiters (26) der Formspulen (10) eine Isolierung, insbesondere mittels Lack- und/oder Pulverbeschichtung, aufweist, wobei vorzugsweise im Bereich der Verbindungsteile (18, 22) keine Isolierung aufgebracht ist oder diese entfernt ist.

7. Stator nach einem der vorhergehenden Ansprüche mit einem Wicklungsaufbau, wobei die Formspulen (10) derart miteinander verbunden sind, dass der Wicklungsaufbau sechs im Umlauf des Stators (132) nacheinander wiederholt nebeneinander angeordnete Stränge aufweist, wobei insbesondere ein erster und ein zweiter Strang einer ersten Phase, ein dritter und ein vierter Strang einer zweiten Phase und ein fünfter und ein sechster Strang einer dritten Phase zugeordnet sind.

8. Stator nach Anspruch 7, wobei der Wicklungsaufbau in mehrere, insbesondere zwei, vier, sechs oder acht, Segmente geteilt ist und gleiche Stränge und/oder Phasen jedes Segments miteinander parallel geschaltet sind.

9. Stator nach einem der vorhergehenden Ansprüche, wobei die Verbindungselemente (30) sowie die Formspulen (10) einen im Wesentlichen gleichen Wärmeausdehnungskoeffizient aufweisen.

10. Stator nach einem der Ansprüche 7 bis 9, wobei Gruppen aus zwölf nebeneinander liegenden ersten Verbindungsteilen (18) mit sechs Verbindungselementen (30) derart verbunden sind, dass zwischen zwei verbundenen ersten Verbindungsteilen (18) fünf erste Verbindungsteile (18) liegen und in Umlaufrichtung drei nebeneinander liegende sich überlappende Verbindungselemente (30) in unterschiedlichen Abständen bzw. Höhen zu einem Zentrum des Wicklungsaufbaus angeordnet sind, und ein erstes, zweites und drittes Verbindungselement (30), die nebeneinander in Umlaufrichtung angeordnet sind, um 180 Grad gedreht gegenüber einem vierten, fünften und sechsten Verbindungselement (30), die in Umlaufrichtung nebeneinander angeordnet sind, angeordnet sind.

11. Verfahren zum Herstellen eines Stators (132) nach einem der Ansprüche 1 bis 10, wobei Formspulen (10) in die Nuten (28) eines Statorgrundkörpers (29) eingesetzt und Verbindungsteile (18, 22) der Formspulen (10) jeweils in einen Durchbruch (36) eines Verbindungselements (30) eingeführt werden und die Verbindungsteile (18, 22) im Bereich des Durchbruchs (36) jeweils derart erhitzt werden, dass sich das Aluminium verflüssigt und nach dem Abkühlen eine Verbindung des Verbindungselements (30) mit dem jeweiligen Verbindungsteil (18, 22) erzeugt.

12. Verfahren nach Anspruch 11, wobei nacheinander benachbarte Formspulen (10) in die Nuten (28) des Statorgrundkörpers (29) eingesetzt werden, wobei eine vorbestimmte Anzahl der ersten einzusetzenden Formspulen (10) nur teilweise in die Nuten (28) eingesetzt oder vor den Nuten (28) positioniert und erst vollständig zusammen mit einer vorbestimmten Anzahl der zuletzt einzusetzenden Formspulen (10) in die entsprechenden Nuten (28) eingesetzt wird.

## Claims

1. A stator of a generator (130) of a wind power installation (100), comprising:
- a stator main body (29), in particular a stator ring (144), having a plurality of circumferential slots (28), wherein respectively adjacent slots (28) are at a substantially identical distance from one another,
- a plurality of form-wound coils (10) which are inserted into the slots (28), wherein each of the form-wound coils comprises: an electrical conductor (26), wherein the electrical conductor (26) has a plurality of turns and also a first end (19) and a second end (23), wherein a first connecting part (18) for connection to a connecting element (30) is arranged at the first end (19) and a second connecting part (22) for connection to a further connecting element (30) is arranged at the second end (23), and wherein the electrical conductor (26) comprises aluminum or is substantially composed of aluminum,
**characterized by** a plurality of connecting elements (30) which in each case two connecting parts (18, 22) of two form-wound coils (10) are connected by welding or soldering, wherein each of the connecting elements (30) corresponds to a U-shaped aluminum sheet with a thickness of at least 5 mm which is preferably stamped or cut by laser-cutting out of an aluminum sheet with a thickness of at least 5 mm, wherein the connecting element (30), at its ends (34a, 34b) of the U shape, has in each case one rectangular aperture (36) for inserting a connecting part (18, 22) of one of the form-wound coils (10).

2. The stator as claimed in claim 1, wherein the connecting parts (18, 22) of the form wound coils (10) each correspond to a substantially straight section of the electrical conductor (26), wherein at least one of the connecting parts (18, 22) of the form-wound coil (10) is angled in relation to a coil longitudinal axis (24) or a line parallel to the coil longitudinal axis (24) and/or the other connecting part (18, 22) is oriented parallel to a coil longitudinal axis (24).

3. The stator as claimed in claim 1 or 2, wherein the form-wound coils (10) have at least one shape in the case of which an outer distance (20) of the outer turn from a geometric center of gravity (17) is more than 40, 50 or 60 cm at least in a region (21) of the outer winding and at least one of the ends (19, 23) of the electrical conductor (26) lies less than 20 cm, preferably less than 10 cm or less than 5 cm, away from at least one point (25) in this region (21).

4. The stator as claimed in one of the preceding claims, wherein the conductor (26) of the form-wound coils (10) has a plurality of layers, in particular two layers, and the layers are designed to be connected to one another by connecting the connecting part (18, 22) to a connecting element (30), and wherein the layers are each preferably formed from a flat aluminum bar, an aluminum strip or a flat aluminum wire.

5. The stator as claimed in one of the preceding claims, wherein the form-wound coils (10) have one of at least three different shapes, wherein at least one of the ends (19, 23) of the electrical conductor (26) of a form-wound coil (10) according to the first shape is at a distance from a geometric center of gravity (17) according to the first shape which differs from the distance of at least one of the ends (19, 23) of a form-wound coil (10) according to the second shape from a geometric center of gravity (17) of the form-wound coil (10) according to the second shape, and wherein the distance of at least one of the ends (19, 23) of a form-wound coil (10) according to the third shape from a geometric center of gravity (17) of a form-coil (10) according to the third shape differs from the corresponding distances of the ends (19, 23) of the form-wound coils (10) according to the first and the second shape.

6. The stator as claimed in one of the preceding claims, wherein the electrical conductor (26) or each layer of the electrical conductor (26) of the form-wound coils (10) has an insulation, in particular by means of lacquer and/or powder coating, wherein preferably no insulation is applied or said insulation is removed in the region of the connecting parts (18, 22).

7. The stator as claimed in one of the preceding claims, comprising a winding structure, wherein the form-wound coils (10) are connected to one another in such a way that the winding structure has six strands which are arranged next to one another repeatedly in succession in the circumference of the stator (132), wherein in particular a first and a second strand are associated with a first phase, a third and a fourth strand are associated with a second phase, and a fifth and a sixth strand are associated with a third phase.

8. The stator as claimed in claim 7, wherein the winding structure is divided into a plurality of, in particular two, four, six or eight, segments and identical strands and/or phases of each segment are connected in parallel with one another.

9. The stator as claimed in one of the preceding claims, wherein the connecting elements (30) and also the form-wound coils (10) have a substantially identical coefficient of thermal expansion.

10. The stator as claimed in one of claims 7 to 9, wherein groups of twelve first connecting parts (18) which are situated next to one another are connected to six connecting elements (30) in such a way that five first connecting parts (18) are situated between two connected first connecting parts (18), and three overlapping connecting elements (30) which are situated next to one another are arranged at different distances or heights in relation to a center of the winding structure in the circumferential direction, and a first, second and third connecting element (30), which are arranged next to one another in the circumferential direction, are arranged rotated through 180 degrees in relation to a fourth, fifth and sixth connecting element (30), which are arranged next to one another in the circumferential direction.

11. A method for producing a stator (132) as claimed in one of claims 1 to 10, wherein form-wound coils (10) are inserted into the slots (28) of a stator main body (29) and connecting parts (18, 22) of the form-wound coils (10) are each inserted into an aperture (36) of a connecting element (30) and the connecting parts (18, 22) in the region of the aperture (36) are each heated in such a way that the aluminum liquefies and after cooling down produces a connection of the connecting element (30) to the respective connecting part (18, 22).

12. The method as claimed in claim 11, wherein form-wound coils (10) which are adjacent in succession are inserted into the slots (28) of the stator main body (29), wherein a predetermined number of the first form-wound coils (10) to be inserted are only partially inserted into the slots (28) or positioned in front of the slots (28) and only fully inserted into the corresponding slots (28) together with a predetermined number of the form-wound coils (10) to be inserted last.

## Revendications

1. Stator d'un générateur (130) d'une éolienne (100), comprenant :
- un corps de base (29) de stator, en particulier une bague (144) de stator, avec plusieurs rainures (28) périphériques, dans lequel les rainures (28) respectivement adjacentes présentent une distance sensiblement égale les unes par rapport aux autres,
- plusieurs bobines formées (10), qui sont insérées dans les rainures (28) et qui comprennent chacune : un conducteur électrique (26), dans lequel le conducteur électrique (26) présente plusieurs spires ainsi qu'une première (19) et une seconde extrémité (23), dans lequel une première pièce de liaison (18) destinée à être reliée à un élément de liaison (30) est disposée sur la première extrémité (19) et une deuxième pièce de liaison (22) destinée à être reliée à un autre élément de liaison (30) est disposée sur la seconde extrémité (23), et dans lequel le conducteur électrique (26) comprend de l'aluminium ou est constitué sensiblement d'aluminium,
**caractérisé par** plusieurs éléments de liaison (30), auxquels respectivement deux pièces de liaison (18, 22) de deux bobines formées (10) sont reliées par soudage ou brasage, dans lequel chacun des éléments de liaison (30) correspond respectivement à une tôle d'aluminium en forme de U d'une épaisseur d'au moins 5 mm, qui est estampée de préférence d'une tôle d'aluminium d'une épaisseur d'au moins 5 mm ou est découpée au laser, dans lequel l'élément de liaison (30) présente, sur ses extrémités (34a, 34b) de la forme en U, respectivement un ajour (36) pour l'introduction d'une pièce de liaison (18, 22) d'une des bobines formées (10).

2. Stator selon la revendication 1, dans lequel les pièces de liaison (18, 22) des bobines formées (10) correspondent chacune à une section sensiblement droite du conducteur électrique (26), dans lequel au moins une des pièces de liaison (18, 22) de la bobine formée (10) est inclinée par rapport à un axe longitudinal de bobine (24) ou une parallèle à l'axe longitudinal de bobine (24) et/ou l'autre pièce de liaison (18, 22) est orientée parallèlement à un axe longitudinal de bobine (24).

3. Stator selon la revendication 1 ou 2, dans lequel les bobines formées (10) présentent au moins une forme dans laquelle une distance extérieure (20) de l'enroulement extérieur présente, au moins dans une zone (21) de l'enroulement extérieur par rapport à un centre de gravité géométrique (17), plus de 40, 50 ou 60 cm et au moins une des extrémités (19, 23) du conducteur électrique (26) est inférieure à 20 cm, de préférence inférieure à 10 cm ou inférieure à 5 cm, de manière éloignée d'au moins un point (25) dans cette zone (21).

4. Stator selon l'une quelconque des revendications précédentes, dans lequel le conducteur (26) des bobines formées (10) présente plusieurs couches, notamment deux couches, et les couches sont mises au point pour être reliées entre elles par liaison de la pièce de liaison (18, 22) à un élément de liaison (30), et dans lequel les couches sont formées de préférence chacune d'une barre plate en aluminium, d'une bande d'aluminium ou d'un fil plat en aluminium.

5. Stator selon l'une quelconque des revendications précédentes, dans lequel les bobines formées (10) présentent une parmi au moins trois formes différentes, dans lequel au moins une des extrémités (19, 23) du conducteur électrique (26) d'une bobine formée (10) selon la première forme présente une distance, par rapport à un centre de gravité géométrique (17) selon la première forme, qui se distingue de la distance d'au moins une des extrémités (19, 23) d'une bobine formée (10) selon la deuxième forme par rapport à un centre de gravité géométrique (17) de la bobine formée (10) selon la deuxième forme, et dans lequel la distance entre au moins une des extrémités (19, 23) d'une bobine formée (10) selon la troisième forme et un centre de gravité géométrique (17) d'une bobine formée (10) selon la troisième forme diffère des distances correspondantes des extrémités (19, 23) des bobines formées (10) selon la première et la deuxième forme.

6. Stator selon l'une quelconque des revendications précédentes, dans lequel le conducteur électrique (26) ou chaque couche du conducteur (26) des bobines formées (10) présente une isolation, notamment au moyen d'un revêtement en peinture et/ou en poudre, dans lequel de préférence aucune isolation n'est appliquée dans la zone des pièces de liaison (18, 22) ou celle-ci est enlevée.

7. Stator selon l'une quelconque des revendications précédentes avec une structure d'enroulement, dans lequel les bobines formées (10) sont reliées entre elles de telle sorte que la structure d'enroulement présente six brins disposés successivement de manière répétée l'un à côté de l'autre dans la rotation du stator (132), dans lequel en particulier un premier et un deuxième brin sont associés à une première phase, un troisième et un quatrième brin sont associés à une deuxième phase et un cinquième et un sixième brin sont associés à une troisième phase.

8. Stator selon la revendication 7, dans lequel la structure d'enroulement est divisée en plusieurs, en particulier deux, quatre, six ou huit, segments et des brins et/ou phases identiques de chaque segment sont connectés en parallèle entre eux.

9. Stator selon l'une quelconque des revendications précédentes, dans lequel les éléments de liaison (30) ainsi que les bobines formées (10) présentent un coefficient de dilatation thermique sensiblement identique.

10. Stator selon l'une quelconque des revendications 7 à 9, dans lequel des groupes de douze premières pièces de liaison (18) adjacentes sont reliés à six éléments de liaison (30) de telle manière qu'entre deux premières pièces de liaison (18) reliées se trouvent cinq premières pièces de liaison (18) et dans le sens de rotation trois éléments de liaison (30) adjacents se chevauchant sont disposés à des distances différentes ou des hauteurs par rapport à un centre de la structure d'enroulement, et un premier, un deuxième et un troisième élément de liaison (30), qui sont disposés côte à côte dans le sens de rotation, sont tournés de 180 degrés par rapport à un quatrième, cinquième et sixième élément de liaison (30) qui sont disposés côte à côte dans le sens de rotation.

11. Procédé de fabrication d'un stator (132) selon l'une quelconque des revendications 1 à 10, dans lequel des bobines formées (10) sont insérées dans les rainures (28) d'un corps de base (29) de stator et des pièces de liaison (18, 22) des bobines formées (10) sont introduites respectivement dans un ajour (36) d'un élément de liaison (30) et les pièces de liaison (18, 22) sont chauffées respectivement dans la zone de l'ajour (36) de telle manière que l'aluminium se liquéfie et génère, après refroidissement, une liaison de l'élément de liaison (30) à la pièce de liaison (18, 22) correspondante.

12. Procédé selon la revendication 11, dans lequel des bobines formées (10) adjacentes sont insérées l'une après l'autre dans les rainures (28) du corps de base (29) de stator, dans lequel un nombre prédéterminé des premières bobines formées (10) à insérer ne sont insérées qu'en partie dans les rainures (28) ou sont positionnées devant les rainures (28) et ne sont insérées que complètement avec un nombre prédéterminé de dernières bobines formées (10) à insérer dans les rainures (28) correspondantes.
